# FASCICULE DE BREVET EUROPEEN

(11) **EP 2 596 255 B1**
(45) Date de publication et mention de la délivrance du brevet: **05.09.2018**
(21) Numéro de dépôt: 11752586.5
(22) Date de dépôt: 18.07.2011
(51) Int. Cl.: F16C 7/00, F16C 7/02

(54) **AÉRONEF COMPRENANT UNE BIELLE COMPORTANT UNE PARTIE EN MATÉRIAU COMPOSITE**
FLUGZEUG MIT EINER VERBINDUNGSSTANGE MIT EINEM TEIL AUS EINEM VERBUNDSTOFF
AIRCRAFT COMPRISING A LINK ROD ONE PART OF WHICH IS MADE OF COMPOSITE

(30) Priorité: 23.07.2010 FR 1056074
(43) Date de publication de la demande: 29.05.2013
(73) Titulaire: Airbus Operations, 31000 Toulouse (FR)
(72) Inventeur: GALLANT, Guillaume, F-31480 Lareole (FR); GUILLEMAUT, Julien, F-31400 Toulouse (FR)
(74) Mandataire: Potdevin, Emmanuel Eric
(86) Numéro de dépôt international: PCT/FR2011/051714
(87) Numéro de publication internationale: WO 2012/010789

(56) Documents cités:
- EP-A1- 0 012 090
- EP-A1- 1 870 196
- DE-A1- 3 346 061
- FR-A1- 2 569 817
- US-A- 4 659 069
- US-A- 5 318 374

## Description

L'invention concerne la structure des aéronefs et en particulier les bielles faisant partie de cette structure.

Un avion comprend communément des bielles formant des pièces de structure. C'est le cas par exemple dans les mâts de réacteur, les trains d'atterrissage, les structures de plancher, les nervures de caisson de voilure, etc. Ces bielles sont soumises à des efforts de traction ou de compression et sont parfois associées entre elles pour former une structure de type treillis. Néanmoins, dans ce type de structure comme dans d'autres agencements, il est fréquent que chaque bielle travaille principalement selon le même mode de sollicitation, à savoir en traction pure ou en compression pure.

Le dimensionnement d'une zone de structure de l'avion, par exemple d'un treillis de bielles, doit respecter un cahier des charges spécifique lié à la tenue mécanique de chaque bielle par rapport à une sollicitation prédéterminée, à sa rigidité et à son encombrement. On cherche en général à minimiser la masse et le coût de ces bielles tout en respectant ce cahier des charges. On cherche plus particulièrement en l'espèce à minimiser la masse d'une bielle soumise à une sollicitation mécanique d'intensité prédéterminée.

Le document FR-2 569 817 décrit une constitution de tube permettant de réunir certains avantages des tubes d'acier, notamment leur résistance aux contraintes excessives, et des tubes en fibres, notamment leur faible poids.

Le document EP-0 012 090 décrit un procédé de fabrication de bielles, dans lequel le tube est composé par une première partie, pouvant être en métal, qui présente au niveau de ses extrémités un fourreau de fibres résistantes imprégné de résine polymérisable au contact de sa paroi interne.

Le document US-4 659 069 décrit à la figure 11 un élément de connexion conforme au préambule de la revendication 1.

Il est connu dans ce contexte d'utiliser des bielles métalliques ou encore des bielles en matériau composite. Chacune de ces technologies a ses avantages et ses inconvénients.

Considérons tout d'abord une bielle sollicitée en traction pure. Son dimensionnement est directement lié à un niveau d'allongement. Si la bielle est métallique, on doit vérifier qu'il ne se produit pas de plastification avant d'atteindre les charges limites, ni de rupture avant d'atteindre les charges extrêmes. Si la bielle est en matériau composite, on doit vérifier le critère de tolérance aux dommages qui impose le niveau d'allongement admissible aux charges extrêmes.

Considérons par exemple un effort de traction de 20 tonnes ou 200.000 N. On compare le comportement d'une bielle en aluminium de référence 2024T42 à celui d'une bielle en matériau composite pré-imprégné à fibres de carbone ayant un module d'Young intermédiaire et orientées selon le mode 50/20/20/10, à savoir 50% à 0° par rapport à la direction de référence, 20% à -45°, 20% à 45° et 10% à 90°. La bielle métallique travaille à un niveau d'allongement plus élevé que la bielle composite. Ainsi, la section de la bielle métallique peut être choisie comme plus faible que celle de la bielle composite. Toutefois, la bielle métallique est plus dense (densité de 2,7) que la bielle composite (densité de 1,6). Par exemple, si une bielle en matériau composite et une bielle métallique présentent des performances sensiblement identiques en traction, la bielle en matériau composite est seulement environ 22 % plus légère que la bielle métallique malgré une densité 41 % plus faible. C'est l'effet de la tolérance aux dommages qui rend la bielle en matériau composite moins efficace car elle travaille à un niveau d'allongement assez bas. Le critère de fatigue n'est pas pris en compte ici mais il pénaliserait la bielle métallique.

Considérons maintenant le cas d'une bielle sollicitée en compression pure. En fonction sa longueur, son dimensionnement peut être lié soit à sa section (c'est le cas d'une bielle courte dont la section est dimensionnée en fonction de l'allongement) soit à son inertie (c'est le cas d'une bielle longue dont l'inertie est dimensionnée en fonction du flambage). En plus de vérifier comme plus haut l'absence de plastification et de rupture ainsi que le critère de tolérance aux dommages, on doit vérifier le critère de flambage pour les deux types de bielle.

Considérons par exemple des bielles courtes de 700 mm de longueur, soumises à un effort de compression de 20 tonnes et réalisées dans les mêmes matériaux respectifs que plus haut. La bielle métallique travaille à un niveau d'allongement plus élevé que la bielle composite. Ainsi, la section de la première peut être choisie 44 % plus faible que la section de la seconde. Cependant, la bielle métallique est plus dense que la bielle composite. Au final, une bielle non dimensionnée en flambage (courte), à performances équivalentes en compression, peut être dimensionnée pour être 5 % plus légère en métal qu'en composite. Cette différence, peu importante malgré la grande différence de densité entre les matériaux, résulte de l'effet de la tolérance aux dommages qui rend la bielle en composite moins efficace car elle travaille à un niveau d'allongement assez bas.

On considère maintenant des bielles longues, par exemple de 1,8 mètre, soumises à un effort de compression de 20 tonnes, réalisées dans les mêmes matériaux respectifs que plus haut. Le module de Young de la bielle composite (89430 Mpa) est légèrement supérieur à celui de la bielle métallique (76500 Mpa). A isogéométrie, la rigidité de flexion (module d'Young et module d'inertie) de la bielle composite sera donc légèrement plus favorable au critère de flambage que celle de la bielle métallique. De plus, cette dernière est plus dense que l'autre. Au final, une bielle dimensionnée en flambage peut être 40 % plus légère en matériau composite qu'en métal. Il s'agit principalement de l'effet de la différence de densité. On peut dire que la bielle composite est dans ce cas pleinement efficace car elle travaille à un niveau d'allongement élevé.

Ainsi, lorsqu'une bielle est dimensionnée en flambage pour une sollicitation en compression, elle est bien plus efficace en matériau composite qu'en métal. Le gain de masse réalisé est proche du gain en densité correspondant au matériau. En revanche, lorsque la bielle n'est pas dimensionnée en flambage (soit pour une sollicitation en compression lorsque la bielle est courte, soit pour une sollicitation en traction), le matériau composite n'est plus aussi efficace à cause du critère de tolérance aux dommages sachant qu'on travaille à un niveau d'allongement beaucoup plus faible que pour une bielle métallique.

Ces deux solutions sont donc imparfaites.

Un but de l'invention est de proposer une bielle offrant un meilleur compromis en termes de coût, de masse et de performances mécaniques.

A cet effet, on prévoit selon l'invention une bielle selon la revendication 1.

Ainsi, la bielle hybride selon l'invention tire parti des propriétés du métal et du matériau composite en les combinant pour donner à la bielle de très bonnes performances mécaniques ainsi qu'un coût et une masse raisonnables. On peut en particulier faire en sorte de faire travailler le matériau composite, donc de faible densité, à un niveau d'allongement élevé et donc non limité par le critère de tolérance aux dommages.

De plus, les deux parties étant disposées sans contact mutuel, notamment dans le tronçon médian, il ne se pose aucun problème de corrosion par la coexistence des deux matériaux au sein de la bielle.

De préférence, les deux parties sont disposées en regard l'une de l'autre dans le tronçon médian.

Ainsi, l'une des parties forme une protection contre l'autre à l'égard des chocs. L'espace existant entre les deux parties autorise la première à se déformer sous l'effet du choc dans une certaine mesure sans que l'autre partie ne se déforme. Ce même espace facilite par ailleurs la déformation de la partie protectrice et rend donc visible sur sa face externe sous la forme d'une cavité la survenue du choc. Cette trace du choc est donc facilement décelable, notamment de façon visuelle, lors d'un contrôle d'inspection.

Avantageusement, l'une des parties s'étend dans l'autre partie.

Elle s'y trouve ainsi protégée à l'égard des chocs, notamment.

De préférence, la partie en matériau composite s'étend dans la partie métallique.

Avantageusement, chacune des deux parties présente une symétrie de révolution autour d'un axe longitudinal de la bielle.

On peut prévoir que la partie interne est creuse.

Au contraire, on peut prévoir que la partie interne est pleine.

Dans une variante, la bielle comprend un matériau s'étendant entre la partie interne et la partie externe et apte à limiter une transmission d'une déformation de l'une à l'autre.

Le matériau peut être un élastomère ou encore une mousse rigide. Avantageusement, les deux parties sont coaxiales.

On obtient ainsi une répartition symétrique des propriétés mécaniques de la bielle autour de son axe longitudinal ou par rapport à ce dernier, selon la forme de la bielle.

Avantageusement, au moins l'une des parties forme un tube, les parties formant de préférence des tubes respectifs.

Ainsi, la masse et la densité de la bielle demeurent peu élevées, ce qui la rend particulièrement appropriée pour son montage à bord d'un aéronef. Le ou les tubes lui donnent cependant de bonnes propriétés mécaniques, notamment pour sa résistance au flambage.

Avantageusement, la bielle comprend une entretoise interposée entre les deux parties suivant une direction radiale à un axe longitudinal de la bielle.

Cette pièce participe à la fixation des deux parties l'une à l'autre tout en les maintenant sans contact mutuel.

De préférence, la bielle comprend au moins une pièce d'extrémité, fixée aux parties sans contact direct avec chacune d'elles.

Ainsi, quel que soit le matériau dans lequel cette pièce d'extrémité est fabriquée, on évite ici encore tout problème de corrosion à l'égard des matériaux formant les parties précitées de la bielle.

De préférence, la pièce d'extrémité est fixée directement à l'entretoise. On pourra notamment prévoir que la pièce est vissée à l'entretoise.

Avantageusement, la bielle comprend au moins un élément de fixation traversant les deux parties et l'entretoise suivant une direction radiale à un axe longitudinal de la bielle.

De préférence, la partie en métal est montée mobile à coulissement par rapport à une extrémité de la bielle suivant la direction longitudinale dans un sens correspondant à son éloignement local de cette extrémité, la bielle comprenant une butée à l'encontre de son coulissement dans l'autre sens.

Ainsi, la partie métallique peut coulisser lorsque la bielle est sollicitée en traction et les sollicitations en traction auxquelles la bielle est soumise entre ses deux extrémités ne sont pas transmises à la partie métallique. C'est seulement la partie en matériau composite qui les supporte. La partie métallique ne travaillant pas en traction, il n'y apparaît pas de phénomène de fatigue.

Par exemple, la partie en métal est montée coulissante sur l'entretoise.

Avantageusement, la bielle comprend une butée immobilisée par complémentarité de forme à l'encontre de son coulissement par rapport à la partie en matériau composite suivant la direction longitudinale dans deux sens opposés.

Il s'agit d'un agencement permettant à la partie en matériau composite de travailler en traction et en compression.

Avantageusement, l'entretoise est en appui axial contre la butée.

De préférence, la butée est en appui contre une pièce de la bielle autre que la partie en matériau composite au moyen d'une face inclinée par rapport à un axe longitudinal de la bielle.

Cette face inclinée assure à la fois un appui axial et un appui radial de la pièce sur la butée, augmentant leur immobilisation mutuelle par effet de coin ainsi qu'éventuellement la fixation d'au moins l'une de ces pièces sur une autre partie de la bielle.

Dans un mode de réalisation, la pièce est une pièce d'extrémité.

Dans un autre mode de réalisation, la pièce est un écrou distinct d'une pièce d'extrémité de la bielle et vissé à l'entretoise.

Dans un mode de réalisation, la bielle est agencée de sorte que la partie en matériau composite présente dans le tronçon médian une sollicitation en tension suivant la direction longitudinale lorsque la bielle est au repos.

Comme la partie métallique est de ce fait précontrainte en compression, elle reprend une partie des efforts de traction appliqués à la bielle sans atteindre un état critique, que ce soit pour sa tenue en statique ou en fatigue. La partie composite est donc moins chargée lors de la sollicitation de la bielle.

On prévoit également selon l'invention un aéronef qui comprend au moins une bielle selon l'invention.

Il comprend par exemple plusieurs bielles selon l'invention formant conjointement une structure en treillis.

On prévoit aussi selon l'invention un procédé de fabrication d'une bielle pour aéronef, dans lequel on assemble au moins deux parties respectivement en métal et en matériau composite de sorte qu'elles forment ensemble une même section d'un tronçon médian de la bielle dans un plan perpendiculaire à une direction longitudinale de la bielle, l'assemblage étant réalisé de sorte que la partie en matériau composite présente dans le tronçon médian une sollicitation en tension suivant la direction longitudinale lorsque la bielle est au repos.

On prévoit en outre selon l'invention un procédé de contrôle d'une bielle selon l'invention dans lequel, la partie qui s'étend dans l'autre étant la partie interne et l'autre la partie externe, on détermine si une face externe de la partie externe présente une cavité.

Comme indiqué plus haut, l'espace séparant la partie protectrice de la partie protégée facilite la déformation de la première sous l'effet du choc et la cavité qui en résulte sur sa face externe est visible et donc décelable.

De préférence, lorsque la face présente la cavité, on détermine une profondeur de la cavité et on la compare à un seuil prédéterminé.

Il est notamment avantageux que ce seuil soit choisi de sorte qu'une profondeur inférieure au seuil est assimilée à une situation dans laquelle la partie protégée est considérée comme intacte tandis qu'une profondeur supérieure au seuil signifie que la partie protégée est altérée par le choc.

Ce procédé permet en retour de faire travailler la bielle à un niveau de charge plus élevé que celui qui serait sinon admissible.

D'autres caractéristiques et avantages de l'invention apparaîtront encore dans la description suivante de plusieurs modes de réalisation donnés à titre d'exemples non limitatifs en référence aux dessins annexés sur lesquels :
- la figure 1 est une vue en perspective d'un aéronef selon l'invention ;
- les figures 2 et 3 sont deux vues en perspective du caisson central de voilure de l'aéronef de la figure 1, la paroi supérieure du caisson étant ôtée sur la figure 3 ;
- la figure 4 est une vue en perspective de l'une des bielles du caisson de la figure 3 ;
- les figures 5 et 6 sont deux vues partielles respectivement en élévation et en coupe longitudinale d'une zone d'extrémité de la bielle de la figure 4 ;
- la figure 7 est une vue à plus grande échelle du détail D de la bielle de la figure 6 ;
- les figures 8 à 11 sont des vues analogues à la figure 6 montrant quatre autres modes de réalisation de la bielle ; et
- les figures 12 et 13 sont des vues d'un tronçon médian de ces bielles montrant deux cas de choc.

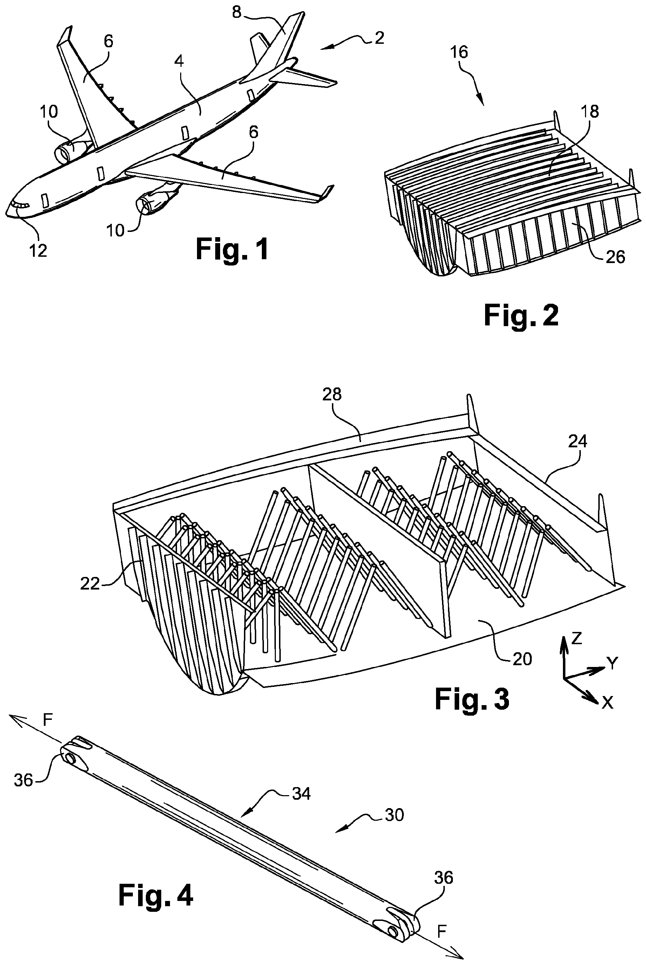

Nous avons illustré à la figure 1 un aéronef selon l'invention. Il s'agit dans le présent exemple d'un aérodyne et en l'espèce d'un avion 2 comprenant un fuselage 4 et deux ailes 6. Il comprend un empennage 8 et des réacteurs 10 ici au nombre de deux et fixés aux ailes respectives. Il s'agit d'un avion destiné au transport de marchandises et/ou d'une ou plusieurs personnes. Il comprend une cabine présentant à l'avant du fuselage 4 un poste de pilotage 12 destiné à être occupé par au moins un pilote.

L'avion 2 comprend un caisson central de voilure 16 illustré aux figures 2 et 3. On a également fait figurer le repère orthonormé XYZ. Dans ce dernier, les directions X et Y sont horizontales et désignent respectivement les directions longitudinale et transversale du fuselage, tandis que la direction Z est la direction verticale.

Le caisson 16 comprend des parois généralement horizontales supérieure 18 et inférieure 20, ainsi que des parois verticales, à savoir deux parois latérales 22 et 24 et deux parois avant 26 et arrière 28. Ces six parois définissent une enceinte occupée notamment par un ensemble de bielles 30 agencées suivant une configuration dite en treillis. Les bielles sont identiques entre elles et réparties en plusieurs groupes de bielles, ici au nombre de huit. Les bielles de chaque groupe sont coplanaires et parallèles les unes aux autres en s'étendant à distance les unes des autres. Chaque bielle s'étend dans un plan parallèle au plan YZ. Les bielles sont disposées en correspondance d'un groupe à l'autre de sorte qu'elles sont réparties dans des plans verticaux parallèles au plan YZ, chacun de ces plans comprenant une bielle de chaque groupe.

Les groupes de bielles sont inclinés en alternance dans des directions opposées de sorte que les bielles des premier et deuxième groupes convergent les unes vers les autres à mesure qu'on se déplace vers le haut. Il en est de même pour les bielles des troisième et quatrième groupes, des cinquième et sixième groupes et des septième et huitième groupes. Inversement, les bielles des deuxième et troisième groupes convergent les unes vers les autres à mesure qu'on se déplace vers le bas. Il en est de même pour les bielles des quatrième et cinquième groupes et sixième et septième groupes.

On présente ici l'invention dans le cadre d'une telle configuration en treillis au sein du caisson 16. Toutefois, les bielles selon l'invention pourront également être mises en oeuvre dans une autre configuration et/ou au sein d'une autre partie de l'avion, par exemple un mât de réacteur, un train d'atterrissage, une structure de plancher ou d'autres parties encore d'une structure de l'avion.

Comme illustré à la figure 4, chaque bielle 30 a une forme générale allongée rectiligne et présente un axe principal 32. La bielle comprend un corps médian 34 formant la plus grande partie de la longueur de la bielle et s'étendant de l'une à l'autre de ses parties d'extrémités axiales 36. Toutes les pièces formant la bielle sont globalement à symétrie de révolution autour de l'axe 32 sauf indication contraire.

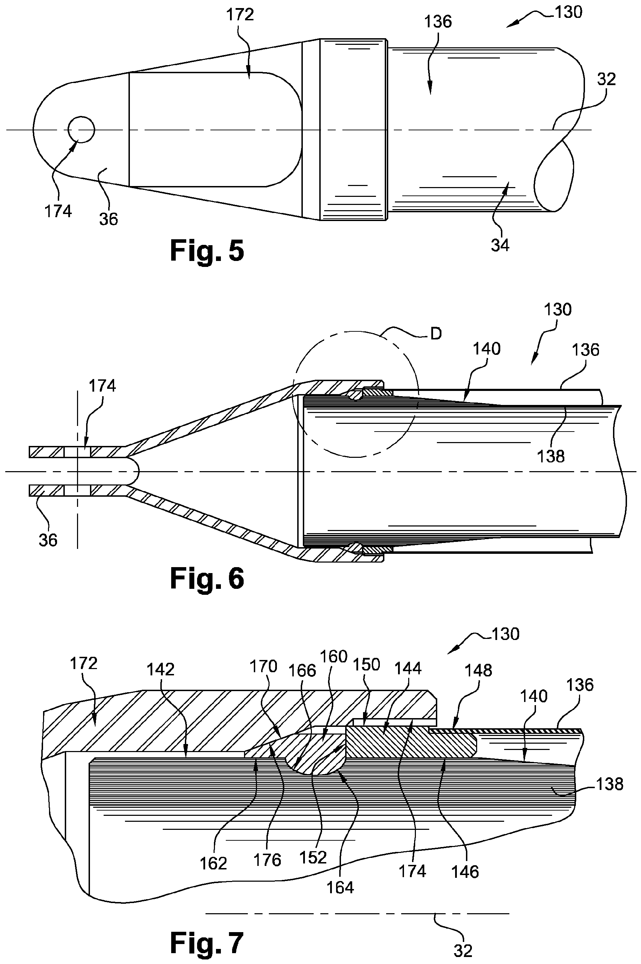

Nous allons décrire en référence aux figures 5 à 7 un premier mode de réalisation de la bielle 130.

Le corps 34 comprend une partie 136 en métal et une partie 138 en matériau composite. Le métal est en l'espèce de l'aluminium tel que celui connu sous la référence 2024T42 mais il pourrait s'agir d'une autre référence d'aluminium ou d'un autre métal. Le matériau composite est en l'espèce une matière plastique renforcée par des fibres de carbone (CFRP pour *carbone fiber reinforced plastic*) et ayant une matrice en résine époxyde. Il s'agit d'un matériau composite pré-imprégné à fibres de carbone ayant un module d'Young intermédiaire et orientées selon le mode 50/20/20/10.

En l'espèce, le corps médian 34 est constitué des parties 136, 138. Chacune de ces dernières est configurée dans le présent exemple sous la forme d'un tube présentant une section circulaire dans un plan perpendiculaire à l'axe 32. Les deux tubes sont coaxiaux et concentriques, le tube 138 en matériau composite étant logé dans le tube métallique 136. Un espace est ménagé entre la face interne du tube métallique et la face externe du tube composite, notamment dans un tronçon médian de la bielle, de sorte qu'ils ne sont pas en contact et s'étendent en regard et à distance l'un de l'autre. Ces deux tubes forment ensemble la section courante du corps médian 34 de la bielle le long de l'axe 32 dans un plan perpendiculaire à ce dernier. Le tube métallique 136 forme l'enveloppe du corps médian.

La section transversale de l'enveloppe métallique 136 est inchangée sur toute sa longueur. Au contraire, la section transversale du tube interne 138 diffère à ses extrémités de sa section en partie médiane. En effet, le tube est plus épais à ses extrémités. La face interne du tube demeure cylindrique sur toute sa longueur. A chaque extrémité du tube, en direction de cette extrémité le long de l'axe 32, à la face cylindrique médiane externe succède une face tronconique 140 qui élargit le diamètre total du tube. A cette dernière succède une face cylindrique 142 à section transversale circulaire s'étendant jusqu'à l'extrémité libre du tube. Le tube interne 138 présente donc des zones d'extrémité de plus grande épaisseur que sa partie médiane.

Chaque extrémité de la bielle 130 comprend une entretoise 144. L'entretoise 144 présente une face interne cylindrique 146 à section circulaire dans un plan perpendiculaire à l'axe 32, par laquelle l'entretoise est en contact surfacique avec la face externe 142, au bord de cette dernière le plus éloigné de l'extrémité libre du tube interne 138. L'entretoise présente deux faces externes cylindriques 148, 150 se succédant dans cet ordre en direction de l'extrémité libre du tube 138. Les deux faces sont à section circulaire dans un plan transversal à l'axe 32. La face 148 est lisse tandis que la face 150 est filetée. La face 148 a un diamètre inférieur au plus petit diamètre de la face 150. L'entretoise présente une face d'extrémité arrière plane 152 perpendiculaire à l'axe 32.

Dans le présent exemple, l'enveloppe métallique 136 est enfilée sur l'entretoise 144 de sorte que sa face interne est en appui surfacique sur la face externe 148. L'extrémité libre de l'enveloppe métallique vient en butée axiale contre un épaulement de l'entretoise formant la jonction entre ses faces externes 148 et 150.

L'extrémité de la bielle comprend en outre une bague 160 formant butée et présentant une face interne 162 de forme cylindrique à section circulaire dans un plan perpendiculaire à l'axe 32. La bague 160 est montée sur le tube interne 138 de sorte que sa face 162 vient en contact surfacique avec la face 142. La bague 160 présente en outre un bourrelet 164 s'étendant en saillie de la face 162 suivant une direction radiale à l'axe 32. Ce bourrelet est logé dans une gorge annulaire 166 ménagée dans une portion médiane de la face 142. On donne ici au bourrelet 164 une forme de demi-ellipse dans un plan radial, le grand axe de l'ellipse étant parallèle à l'axe 32 et aligné avec la face 142. Pour pouvoir être insérée dans cette gorge, la bague 160 est réalisée en deux ou trois parties dont la jonction s'effectue dans un ou plusieurs plans radiaux à l'axe 32. La complémentarité de forme entre le bourrelet 164 et la gorge 166 assure une immobilisation de la bague 160 par rapport au tube interne 138 à l'encontre de leur coulissement mutuel dans les deux sens suivant la direction de l'axe 32. La bague 160 présente une face avant plane perpendiculaire à l'axe 32 et en contact surfacique avec la face 152 de l'entretoise 144. Elle présente en outre une face arrière 170 de forme tronconique orientée en direction opposée à la partie médiane de la bielle. Cette face est donc localement inclinée par rapport à l'axe 32.

La bielle comprend en outre une chape métallique 172, ici en aluminium, qui en forme en l'espèce l'extrémité libre. La chape présente à son extrémité libre une configuration en fourche visible sur la figure 6, les deux flancs de la fourche étant traversés par deux orifices coaxiaux 174 qui permettent d'articuler cette extrémité de la bielle à une autre pièce de l'avion autour d'un axe perpendiculaire à l'axe 32.

La chape 172 présente une face interne filetée 174 au moyen de laquelle elle est vissée sur la face 150 de l'entretoise. La chape comprend en outre une face interne tronconique 176 agencée pour réaliser un appui surfacique contre la face 170 de la bague 160. Cet appui incliné tend donc à solliciter la bague 160 suivant la direction axiale en direction de l'entretoise 144 contre laquelle elle est en butée, et en direction radiale en direction du tube interne 138 pour mieux immobiliser le bourrelet 164 dans la gorge 166.

Grâce à ce montage, l'entretoise 144, la bague 160, le tube interne 138 et la chape 172 sont rigidement fixés les uns aux autres. L'enveloppe métallique 136 est bloquée à l'encontre de son coulissement axial en direction de la chape 172 par sa butée contre l'épaulement de l'entretoise 144. Elle est toutefois libre de coulisser en sens opposé par rapport à toutes ces pièces à partir de l'épaulement.

On voit que l'entretoise 144 est interposée entre les deux tubes 136, 138 suivant une direction radiale à l'axe 32. La bague 160 est interposée entre la chape et le tube 138 suivant une direction radiale à l'axe 132. La chape 172 est fixée aux deux tubes sans contact direct avec chacun d'eux. Un espace est en effet ménagé entre la face 142 du tube interne 138 et la face en regard de la chape 172. On évite ainsi tout problème de corrosion qui pourrait survenir au contact de la chape avec les deux tubes.

On peut réaliser l'entretoise 144 en un matériau glissant et/ou isolant chimiquement. L'entretoise 144 peut être réalisée en métal, par exemple en acier ou en titane. En titane, elle présente un potentiel d'oxydo-réduction proche de celui du carbone du matériau composite du tube 138 et est donc peu susceptible de le corroder. Il en est de même pour la bague 160.

L'enveloppe métallique 136 est libre de coulisser par rapport au tube composite 138 lorsque la bielle 130 est sollicitée en traction axiale entre ses deux extrémités 36 comme indiqué par les forces F sur la figure 4. Par conséquent, le tube métallique 136 ne travaille pas en traction. Il ne peut donc pas y avoir de problème de fatigue sur ce dernier. L'effort de traction appliqué sur les chapes 172 se transmet à chaque extrémité à l'entretoise 144 puis à la bague 160 et enfin au tube composite 138. C'est donc seulement ce dernier qui supporte l'effort de traction au sein du corps médian.

Lors d'une sollicitation en compression axiale exercée sur les deux chapes 172, l'effort est transmis par chaque chape à la fois à l'entretoise 144 via la liaison filetée et à la bague 160 via la face inclinée 170. La bague 160 transmet les efforts directement par matage dans le tube composite 138 et l'entretoise 144 transmet les efforts par appui axial direct sur l'enveloppe métallique 136. Ainsi, en compression, on fait travailler les deux tubes simultanément dans le corps médian de la bielle. La charge se trouve donc répartie sur ces deux tubes.

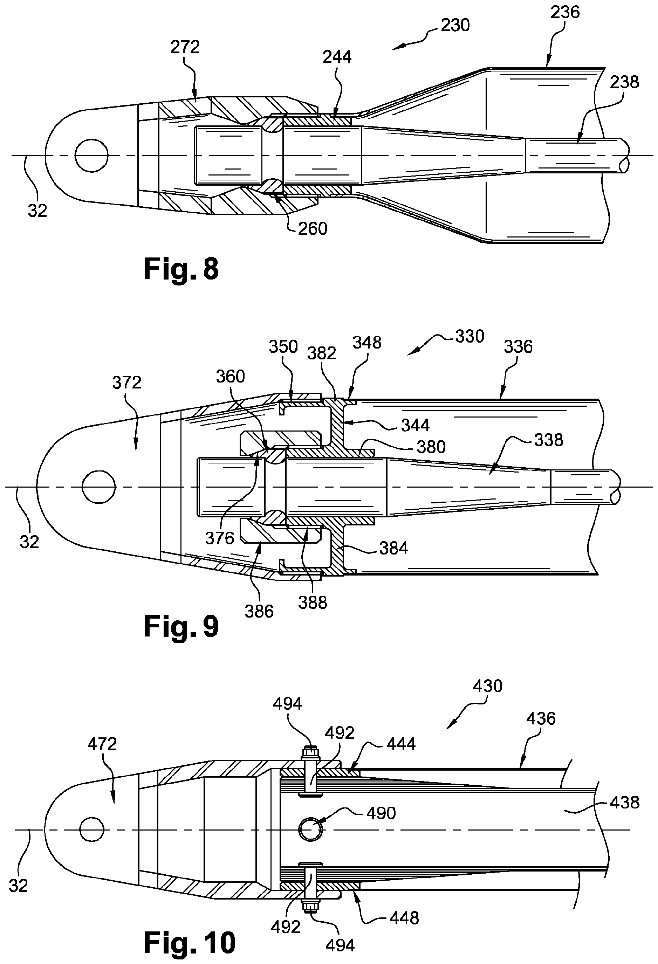

Nous allons décrire en référence à la figure 8 un deuxième mode de réalisation de la bielle 230 selon l'invention. Les caractéristiques qui ne seront pas décrites à nouveau sont communes avec le premier mode. Les références numériques des éléments analogues sont augmentées de 100. Il en sera de même pour les modes de réalisation suivants.

On retrouve l'enveloppe externe métallique 236 formant un tube. Toutefois, le tube comprend une partie médiane à section cylindrique se poursuivant en direction de la chape 272 par un tronçon de forme tronconique dont le rayon va en se réduisant dans la même direction. A ce tronçon succède un tronçon cylindrique formant l'extrémité libre de l'enveloppe.

La partie composite du corps médian de la bielle est formée cette fois par un corps plein tel qu'une tige ou un jonc 238 qui comprend en l'espèce un tronçon médian cylindrique auquel fait suite en direction de la chape 272 un tronçon tronconique dont le rayon va en s'élargissant dans la même direction et qui se termine par un tronçon d'extrémité libre de forme cylindrique à section transversale circulaire.

L'entretoise 244 est de nouveau vissée dans la chape 272 et porte l'enveloppe 236 qu'elle autorise à glisser dans un sens. La bague 260 a une configuration identique à celle du premier mode. La chape 272 a une configuration proche de celle du premier mode. Elle vient cette fois en appui contre le jonc au moyen d'un bourrelet annulaire.

Le fonctionnement et le comportement de la bielle sont identiques à ceux du premier mode.

Un troisième mode de réalisation est illustré à la figure 9. Ici encore, la partie composite interne 338 est réalisée sous la forme d'un jonc. Sur toute sa longueur, l'enveloppe métallique 336 a une forme cylindrique et sa section transversale demeure inchangée.

L'entretoise 344 comprend en l'espèce un moyeu 380 et une jupe 382 s'étendant à distance du moyeu, en périphérie et en regard de ce dernier. Le moyeu et la jupe sont reliés par un flasque plan 384 perpendiculaire à l'axe 32. Les faces 350 et 348 sont des faces externes de la jupe.

Ici, la chape 372 est rigidement fixée à l'entretoise 344 sans participer à la fixation du jonc 338 à cette dernière. Pour cela, la chape 372 est vissée directement sur la face externe filetée 350. L'autre face externe 348 porte l'enveloppe 336 de telle sorte que cette dernière est bloquée en coulissement axial en direction de la chape mais est libre de coulisser par rapport à l'entretoise en direction opposée.

On retrouve, comme dans les précédents modes, la bague 360 rigidement fixée par complémentarité de forme au jonc 338 et contre laquelle est cette fois en butée axiale le moyeu 380 de l'entretoise 344.

L'extrémité de la bielle comprend un écrou 386 indépendant des autres pièces, enfilé sur le jonc et vissé directement sur une face externe 388 du moyeu 380. C'est cette fois l'écrou qui porte la face tronconique 376 venant en appui contre la face tronconique de la bague 360. On peut réaliser l'écrou 386 dans un métal tel que l'acier ou le titane. L'écrou 386 permet donc d'immobiliser rigidement l'entretoise 344, la bague 360 et le jonc 338 les uns aux autres. La jupe 382 et le moyeu 380 forment une cavité dans laquelle s'étend une partie de l'écrou. La chape 372 définit avec l'entretoise 344 une enceinte dans laquelle sont logés l'écrou, la bague 360 et l'extrémité du jonc 338.

Le fonctionnement et le comportement de la bielle de ce mode de réalisation sont identiques à ceux du premier mode.

La chape 472 du quatrième mode de réalisation illustré à la figure 10 a une configuration proche de celle du premier mode illustré à la figure 7. Toutefois, la bague formant butée est absente. Et la chape 472 est enfilée sur la face externe 150 de l'entretoise 444 sans y être vissée, leurs faces de contact étant lisses. Des orifices radiaux 490 sont ménagés dans le tube composite interne 438, l'entretoise 444 et la chape 472 de façon à former plusieurs groupes d'orifices en coïncidence, ces groupes étant par exemple au nombre de quatre. Dans chacun de ces groupes d'orifices, un élément de fixation tel qu'un assemblage à vis 492 et écrou 494 est inséré pour fixer rigidement ces pièces entre elles. Comme précédemment, l'enveloppe métallique 436 est portée par la face externe 448 de l'entretoise 444 et est libre de coulisser en s'éloignant de cette dernière suivant la direction axiale.

Dans chacun de ces modes de réalisation, si le tube métallique est endommagé, il peut être remplacé en démontant la bielle. En effet, la chape est à chaque fois démontable. Il s'agit d'un avantage substantiel dans la mesure où le tube métallique est en général beaucoup moins coûteux que le tube ou le jonc en matériau composite. Dans chacun de ces modes de réalisation, le tube ou le jonc en matériau composite est protégé des impacts et des agressions chimiques à l'intérieur de la bielle. On peut donc le faire travailler à un niveau d'allongement plus élevé que s'il était exposé à l'extérieur de la bielle.

Avec une bielle selon l'un de ces modes de réalisation, pour une même performance en traction, le gain de masse sur la bielle se situe entre 22 et 26 % par rapport à une bielle intégralement réalisée en matériau composite, et entre 44 et 48 % par rapport à une bielle intégralement métallique. Le gain par rapport à cette dernière peut même être supérieur si l'on prend en compte le critère de fatigue. Ces calculs résultent d'analyses réalisées avec les valeurs suivantes :
- pour la bielle composite, une épaisseur de 4,3 millimètres, un diamètre médian externe de 49 millimètres, cette bielle formant la masse de référence ;
- pour la bielle métallique, une épaisseur de 3,4 millimètres, un diamètre médian externe de 44 millimètres, ce qui lui donne un supplément de masse de 22 % ;
- pour une bielle hybride dans le cas du jonc, un diamètre de jonc de 19 millimètres, une épaisseur de tube métallique de 0,7 millimètre et un diamètre externe du tube de 41 millimètres, ce qui donne une réduction de masse de 26 % ; et
- pour la bielle hybride dans le cas du tube composite, une épaisseur de ce dernier de 3,3 millimètres, un diamètre externe du tube composite de 30 millimètres, une épaisseur du tube d'aluminium de 0,7 millimètre et un diamètre externe de ce dernier de 51 millimètres, ce qui donne une réduction de masse de 22 %.

Lorsque la bielle est soumise à des efforts de compression faibles devant la longueur de la bielle (celle-ci n'étant pas dimensionnée en flambage), le gain de masse de la bielle hybride est de 28 % par rapport à une bielle métallique et de 32 % par rapport à une bielle en matériau composite. Les valeurs ayant donné ce résultat sont les suivantes :
- bielle composite : épaisseur de 4,2 millimètres, diamètre médian externe de 66 millimètres et masse de référence ;
- bielle métallique : épaisseur de 2,9 millimètres, diamètre médian externe de 54 millimètres et réduction de masse de 5 % ;
- bielle hybride dans le cas du jonc : diamètre du jonc de 17 millimètres, épaisseur du tube d'aluminium de 0,7 millimètre et diamètre externe du tube de 86 millimètres, ce qui donne une réduction de masse de 33 % ; et
- bielle hybride dans le cas du tube composite : épaisseur de ce dernier 2,1 millimètres, diamètre externe du tube composite de 44 millimètres, épaisseur de l'aluminium de 0,7 millimètre et diamètre externe du tube d'aluminium de 65 millimètres, ce qui donne une réduction de masse de 37 %.

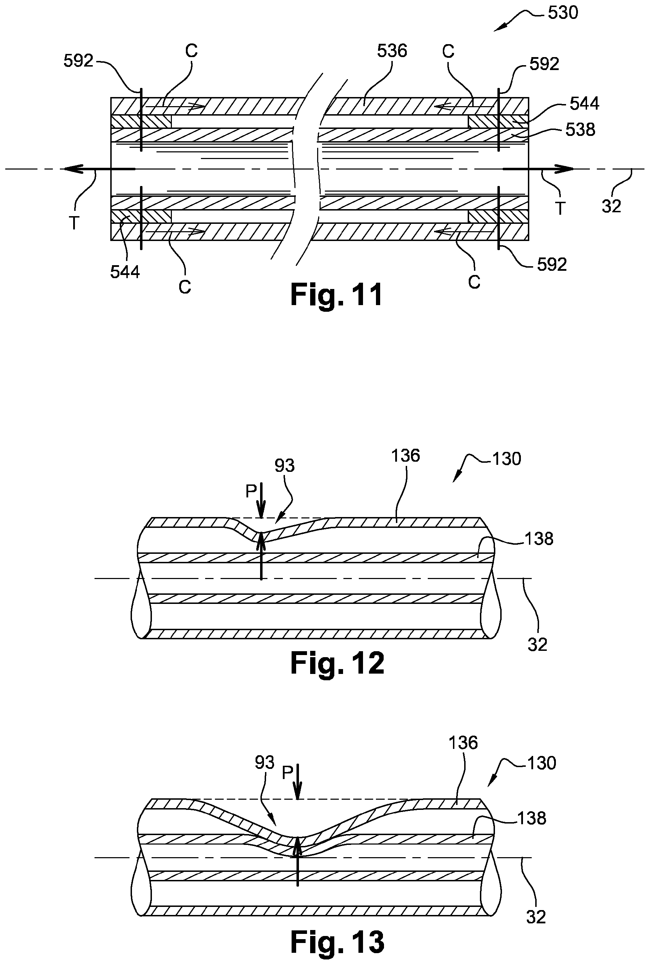

Nous décrivons ci-après un cinquième mode de réalisation de la bielle, illustré à la figure 11.

On retrouve que la bielle 530 comprend un tube métallique externe 536 et une partie interne 538 en matériau composite, ici encore un tube, formant ensemble une même section d'un tronçon médian de la bielle dans un plan perpendiculaire à la direction longitudinale 32. Les deux tubes sont coaxiaux et disposées sans contact mutuel.

Les deux parties en matériau composite et en métal sont cette fois rigidement fixées l'une à l'autre, sans donc de possibilité de coulissement de la partie métallique 536 par rapport à l'autre 538.

De plus, l'assemblage des deux parties est réalisé de sorte que la partie 538 en matériau composite présente dans un tronçon médian de la bielle une sollicitation en tension T suivant la direction longitudinale 32 lorsque la bielle est au repos. La partie métallique 536, sur laquelle prend appui la partie en matériau composite, présente donc quant à elle, dans le tronçon médian, une sollicitation en compression C suivant la même direction lorsque la bielle est au repos. Ces sollicitations, qui s'équilibrent au repos, ont été arbitrairement localisées sur la figure 11 pour la clarté de la représentation, étant entendu qu'elles s'appliquent sur la plus grande portion de la pièce concernée, notamment dans le tronçon médian. Le maintient de ces sollicitations est assuré au moins en partie par les organes de fixation 592 des parties 536, 538 l'une à l'autre et aux entretoises 544.

Ainsi, plutôt que de prévoir que la partie métallique puisse coulisser dans un sens par rapport l'extrémité de la bielle (afin de ne pas solliciter cette partie en traction), on prévoit ici de monter en pré-tension la partie composite 538, ce qui permet de pré-contraindre la partie métallique 536 en compression.

Les avantages d'une telle solution sont de faire travailler la partie métallique 536 lorsque la bielle est sollicitée en traction dans des circonstances normales d'utilisation et de fonctionnement. Comme la partie métallique est précontrainte, elle reprend une partie des efforts de traction appliqués à la bielle sans atteindre un état critique, que ce soit pour sa tenue en statique ou en fatigue. La partie métallique reprenant une partie des efforts, la partie composite est moins chargée lors de la sollicitation de la bielle.

Mises à part ces particularités propres à ce mode de réalisation, la bielle pourra être constituée comme dans l'un des modes précédents, par exemple celui de la figure 10. L'absence de mobilité permet en outre de réduire le nombre de pièces de la bielle et d'en simplifier la structure.

Dans chacun de ces modes de réalisation, la bielle a en outre l'avantage de présenter le comportement suivant décrit à l'appui des figures 12 et 13. On utilise ici les références numériques de la bielle 130 selon le premier mode mais il pourrait s'agir des autres bielles.

La partie interne 138 en matériau composite étant reçue dans la partie externe métallique 136, elle se trouve protégée dans une grande mesure à l'égard des chocs. En effet, s'il survient un choc sur la partie externe 136, l'élément qui heurte la bielle creuse une cavité 93 formant une singularité dans la face externe de la partie externe. Cette cavité est visible depuis l'extérieur de la bielle et permet à un contrôleur de déceler la survenue du choc dont elle constitue la trace. On dispose ainsi d'un procédé de contrôle de la bielle avant ou après montage sur l'aéronef, voire au cours de la vie de ce dernier. Pour mettre en oeuvre ce procédé, on détermine si la face externe de la partie externe 136 présente une cavité 93. La cavité peut présenter une forme quelconque, et former un cratère, une rainure, etc.

Dans un mode de mise en oeuvre avantageux de ce procédé, on mesure une profondeur p de la cavité en direction radiale à l'axe 32 et on la compare à un seuil prédéterminé. Ce dernier est ici choisi de sorte qu'il est égal à la distance séparant les faces externes des parties externe et interne 136, 138 (d'un même côté de l'axe), diminuée de l'épaisseur de la paroi de la partie externe. Ainsi, lorsque la profondeur *p* est inférieure au seuil comme sur la figure 12, on sait que la partie interne n'a pas été endommagée par le choc, la partie externe n'étant pas venue en contact avec cette dernière. Inversement, lorsque la profondeur p est supérieure au seuil comme sur la figure 13, on sait que la partie interne a été endommagée par le choc, la partie externe étant venue en contact avec elle. Lorsque l'inspection visuelle a permis de déceler la survenue d'un choc, on peut donc déterminer la gravité des dommages et décider des mesures les plus adaptées.

Cet effet de protection et ce procédé sont particulièrement avantageux lorsque la partie interne est celle en matériau composite mais ils ne sont pas réservés à ce cas.

Dans chacun de ces modes de réalisation, on peut prévoir en variante d'interposer entre les parties interne et externe 136, 138 de la bielle une couche de matériau déformable 95 apte à absorber des déformations mécaniques en limitant leur transmission de la partie externe à la partie interne. Le matériau a été représenté en partie basse de la figure12 pour illustrer cette variante. Cette couche peut par exemple occuper tout l'espace entre les deux parties en étant en contact avec chacune d'elles. Ce matériau permet de protéger davantage la partie interne lorsque la partie externe subit un choc.

Ce matériau est par exemple un élastomère naturel ou synthétique.

Il peut aussi s'agir d'un matériau alvéolaire tel qu'une mousse solide rigide. Cette mousse est par exemple à base de polyméthacrilimide. On pourra par exemple utiliser à ce titre le matériau commercialisé sous la marque ROHACELL® par Evonik industries.

Bien entendu, on pourra apporter à l'invention de nombreuses modifications sans sortir du cadre de celle-ci.

On peut prévoir que les deux parties en matériau composite et en métal sont rigidement fixées l'une à l'autre (sans donc de possibilité de coulissement de la partie métallique par rapport à l'autre) sans que l'une des deux soit précontrainte lorsque la bielle est au repos.

## Revendications

1. Bielle (130-530) pour aéronef comprenant au moins deux parties (136-536, 138-538) respectivement en métal et en matériau composite formant ensemble une même section d'un tronçon médian (34) de la bielle dans un plan perpendiculaire à une direction longitudinale (32) de la bielle, les deux parties (136-536, 138-538) formant ensemble une même section d'un tronçon médian de la bielle sur une plus grande partie de la longueur de la bielle, et étant disposées sans contact mutuel et à distance l'une de l'autre dans le tronçon médian, l'une des deux parties s'étendant dans l'autre, **caractérisée en ce que** la distance entre les deux parties est constante sur une plus grande partie de la longueur de la bielle.

2. Bielle selon au moins l'une quelconque des revendications précédentes dans laquelle les deux parties (136-536, 138-538) sont disposées en regard l'une de l'autre dans le tronçon médian.

3. Bielle selon au moins l'une quelconque des revendications précédentes dans laquelle la partie en matériau composite (138-538) s'étend dans la partie métallique (136-536).

4. Bielle selon au moins l'une quelconque des revendications précédentes dans laquelle chacune des deux parties (136-536, 138-538) présente une symétrie de révolution autour d'un axe longitudinal (32) de la bielle.

5. Bielle selon au moins l'une quelconque des revendications précédentes dans laquelle la partie interne (138; 438; 538) est creuse.

6. Bielle selon au moins l'une quelconque des revendications 1 à 4 dans laquelle la partie interne (238; 338) est pleine.

7. Bielle selon au moins l'une quelconque des revendications précédentes qui comprend un matériau (95) s'étendant entre la partie interne et la partie externe et apte à limiter une transmission d'une déformation de l'une à l'autre.

8. Bielle selon la revendication précédente dans laquelle le matériau (95) est un élastomère.

9. Bielle selon la revendication 7, dans laquelle le matériau (95) est une mousse rigide.

10. Bielle selon au moins l'une quelconque des revendications précédentes qui comprend au moins une pièce d'extrémité (172-472) fixée aux parties sans contact direct avec chacune d'elles.

11. Bielle selon au moins l'une quelconque des revendications précédentes dans laquelle la partie en métal (136-436) est montée mobile à coulissement par rapport à une extrémité de la bielle suivant la direction longitudinale dans un sens correspondant à son éloignement local de cette extrémité, la bielle comprenant une butée (144-444) à l'encontre de son coulissement dans l'autre sens.

12. Bielle selon au moins l'une quelconque des revendications précédentes qui comprend une butée (160-360) immobilisée par complémentarité de forme à l'encontre de son coulissement par rapport à la partie (138-338) en matériau composite suivant la direction longitudinale dans deux sens opposés.

13. Bielle selon la revendication précédente dans laquelle la butée (160-360) est en appui contre une pièce (172 ; 272 ; 386) de la bielle autre que la partie en matériau composite au moyen d'une face inclinée par rapport à un axe longitudinal (32) de la bielle.

14. Bielle selon la revendication précédente dans laquelle la pièce (172 ; 272) est une pièce d'extrémité.

15. Bielle selon la revendication 13 dans laquelle la pièce (386) est un écrou distinct d'une pièce d'extrémité (372) de la bielle et vissé à une entretoise (344) interposée entre les deux parties (336, 338) suivant une direction radiale à un axe longitudinal (32) de la bielle.

16. Bielle selon au moins l'une quelconque des revendications précédentes, agencée de sorte que la partie en matériau composite (538) présente dans le tronçon médian une sollicitation en tension (T) suivant la direction longitudinale (32) lorsque la bielle est au repos.

17. Aéronef (2) **caractérisé en ce qu'**il comprend au moins une bielle (130-530) selon au moins l'une quelconque des revendications précédentes, l'aéronef comprenant par exemple plusieurs bielles selon au moins l'une quelconque des revendications précédentes formant conjointement une structure en treillis.

18. Procédé de fabrication d'une bielle (530) pour aéronef selon la revendication 1, l'assemblage étant réalisé de sorte que la partie en matériau composite (538) présente dans le tronçon médian une sollicitation en tension (T) suivant la direction longitudinale lorsque la bielle est au repos.

19. Procédé de contrôle d'une bielle selon la revendication 1 , la partie (138-538) qui s'étend dans l'autre (136-536) étant la partie interne et l'autre la partie externe, procédé dans lequel on détermine si une face externe de la partie externe présente une cavité (93).

20. Procédé selon la revendication précédente dans lequel, lorsque la face présente la cavité (93), on détermine une profondeur (*p*) de la cavité et on la compare à un seuil prédéterminé.

## Patentansprüche

1. Pleuelstange (130-530) für ein Luftfahrzeug, umfassend mindestens zwei Teile (136-536, 138-538) aus Metall bzw. aus Verbundmaterial, die zusammen einen gleichen Abschnitt eines Mittelstücks (34) der Pleuelstange in einer Ebene senkrecht zu einer Längsrichtung (32) der Pleuelstange bilden, wobei die beiden Teile (136-536, 138-538) zusammen einen gleichen Abschnitt eines Mittelstücks (34) der Pleuelstange auf einem größeren Längenabschnitt der Pleuelstange bilden, und die ohne gegenseitigen Kontakt und mit einem Abstand voneinander in dem Mittelstück angeordnet sind, wobei sich der eine Teil der beiden Teile in den anderen Teil erstreckt, **dadurch gekennzeichnet, dass** der Abstand zwischen den beiden Teilen konstant auf einem größeren Längenabschnitt der Pleuelstange ist.

2. Pleuelstange nach mindestens einem der vorhergehenden Ansprüche, wobei die beiden Teile (136-536, 138-538) in dem Mittelstück einander gegenüberliegen.

3. Pleuelstange nach mindestens einem der vorhergehenden Ansprüche, wobei sich das Verbundmaterialteil (138-538) in das Metallteil (136-536) erstreckt.

4. Pleuelstange nach mindestens einem der vorhergehenden Ansprüche, wobei jedes der beiden Teile (136-536, 138-538) eine Rotationssymmetrie um eine Längsachse (32) der Pleuelstange aufweist.

5. Pleuelstange nach mindestens einem der Ansprüche 4 bis 6, wobei das innere Teil (138; 438; 538) hohl ist.

6. Pleuelstange nach mindestens einem der Ansprüche 1 bis 4, wobei das innere Teil (238; 338) massiv ist.

7. Pleuelstange nach mindestens einem der vorhergehenden Ansprüche, die ein Material (95) umfasst, das sich zwischen dem inneren Teil und dem äußeren Teil erstreckt und in der Lage ist, eine Übertragung einer Verformung von einem Teil auf den anderen Teil zu begrenzen.

8. Pleuelstange nach dem vorhergehenden Anspruch, wobei das Material (95) ein Elastomer ist.

9. Pleuelstange nach Anspruch 7, wobei das Material (95) ein Hartschaum ist.

10. Pleuelstange nach mindestens einem der vorhergehenden Ansprüche, die mindestens ein Endstück (172-472) aufweist, das an den Teilen ohne direkten Kontakt mit jedem von ihnen befestigt ist.

11. Pleuelstange nach mindestens einem der vorhergehenden Ansprüche, wobei das Metallteil (136-436) in Bezug auf ein Ende der Pleuelstange in Längsrichtung in einer Richtung verschiebbar angebracht ist, die seinem lokalen Abstand von diesem Ende entspricht, wobei die Pleuelstange einen Anschlag (144-444) gegen ihr Verschieben in die andere Richtung aufweist.

12. Pleuelstange nach mindestens einem der vorhergehenden Ansprüche, die einen Anschlag (160-360) umfasst, der durch Komplementarität der Form ihr Verschieben in Bezug auf das Verbundmaterialteil (138-338) in Längsrichtung in zwei entgegensetzten Richtungen blockiert.

13. Pleuelstange nach dem vorhergehenden Anspruch, wobei der Anschlag (160-360) gegen ein anderes Teil (172; 272; 386) der Pleuelstange als das Verbundmaterialteil mittels einer Fläche anliegt, die in Bezug auf eine Längsachse (32) der Pleuelstange geneigt ist.

14. Pleuelstange nach dem vorhergehenden Anspruch, wobei das Teil (172; 272) ein Endstück ist.

15. Pleuelstange nach Anspruch 13, wobei das Teil (386) eine Mutter ist, die von einem Endstück (372) der Pleuelstange getrennt ist und mit einem Abstandshalter (344) verschraubt ist, der zwischen den beiden Teilen (336, 338) in einer Richtung radial zu einer Längsachse (32) der Pleuelstange angeordnet ist.

16. Pleuelstange nach mindestens einem der vorhergehenden Ansprüche, derart angeordnet, dass das Verbundmaterialteil (538) im Mittelstück eine Zugspannung (T) in Längsrichtung (32) aufweist, wenn sich die Pleuelstange in Ruhe befindet.

17. Luftfahrzeug (2) **dadurch gekennzeichnet, dass** es mindestens eine Pleuelstange (130-530) nach mindestens einem der vorhergehenden Ansprüche aufweist, wobei das Luftfahrzeug beispielsweise mehrere Pleuelstangen nach mindestens einem der vorhergehenden Ansprüche aufweist, die zusammen eine Gitterstruktur bilden.

18. Verfahren zur Herstellung einer Pleuelstange (530) für Luftfahrzeuge gemäß Anspruch 1, wobei die Montage auf die Art realisiert wird, dass das Verbundmaterialteil (538) in dem Mittelstück in Längsrichtung eine Zugspannung (T) aufweist, wenn sich die Pleuelstange in Ruhe befindet.

19. Verfahren zum Kontrollieren einer Pleuelstange nach Anspruch 1, wobei das Teil (138-538), das sich in das andere Teil (136-536) erstreckt, das innere Teil ist, und das andere Teil das äußere Teil ist, wobei bei dem Verfahren bestimmt wird, ob eine äußere Fläche des äußeren Teils einen Hohlraum (93) aufweist.

20. Verfahren nach dem vorhergehenden Anspruch, wobei, wenn die Fläche den Hohlraum (93) aufweist, eine Tiefe (p) des Hohlraums bestimmt und mit einer vorbestimmten Schwelle verglichen wird.

## Claims

1. Aircraft link rod (130-530) comprising at least two parts (136-536, 138-538) respectively made of metal and composite material and together forming one and the same section of a central portion (34) of the link rod in a plane perpendicular to a longitudinal direction (32) of the link rod, the two parts (136-536, 138-538) together forming one and the same section of a central portion of the link rod over most of the length of the link rod, and being arranged without mutual contact and at a distance from each other in the central portion, one of the two parts extending into the other, **characterised in that** the distance between the two parts is constant over most of the length of the link rod.

2. Link rod according to at least any one of the preceding claims, wherein the two parts (136-536, 138-538) are arranged opposite each other in the central portion.

3. Link rod according to at least any one of the preceding claims, wherein the part made of composite material (138-538) extends into the metal part (136-536).

4. Link rod according to at least any one of the preceding claims, wherein each of the two parts (136-536, 138-538) has a symmetry of revolution about a longitudinal axis (32) of the link rod.

5. Link rod according to at least any one of the preceding claims, wherein the internal part (138; 438; 538) is hollow.

6. Link rod according to at least any one of claims 1 to 4, wherein the internal part (238; 338) is solid.

7. Link rod according to at least any one of the preceding claims, which comprises a material (95) extending between the internal part and the external part and adapted to limit transmission of a deformation from one to the other.

8. Link rod according to the preceding claim, wherein the material (95) is an elastomer.

9. Link rod according to claim 7, wherein the material (95) is a rigid foam.

10. Link rod according to at least any one of the preceding claims, which comprises at least one end piece (172-472) attached to the parts without direct contact with either one of them.

11. Link rod according to at least any one of the preceding claims, wherein the metal part (136-436) is mounted movably by sliding relative to one end of the link rod in the longitudinal direction in a direction corresponding to its local distance from this end, the link rod comprising a stop (144-444) preventing it from sliding in the other direction.

12. Link rod according to at least any one of the preceding claims, which comprises a stop (160-360) immobilised by shape complementarity preventing it from sliding relative to the part (138-338) made of composite material in the longitudinal direction in two opposite directions.

13. Link rod according to the preceding claim, wherein the stop (160-360) rests against a part (172; 272; 386) of the link rod other than the part made of composite material by means of a face inclined relative to a longitudinal axis (32) of the link rod.

14. Link rod according to the preceding claim, wherein the part (172; 272) is an end part.

15. Link rod according to claim13, wherein the part (386) is a nut separate from an end part (372) of the link rod and screwed to a spacer (344) inserted between the two parts (336, 338) in a direction radial to a longitudinal axis (32) of the link rod.

16. Link rod according to at least any one of the preceding claims, arranged such that the part made of composite material (538) is subjected in the central portion to tensile stress (T) in the longitudinal direction (32) when the link rod is at rest.

17. Aircraft (2) **characterised in that** it comprises at least one link rod (130-530) according to at least any one of the preceding claims, the aircraft comprising for example several link rods according to at least any one of the preceding claims forming together a trellis structure.

18. Method for manufacturing an aircraft link rod (530) according to claim 1, the assembly being manufactured such that the part made of composite material (538) is subjected in the central portion to tensile stress (T) in the longitudinal direction when the link rod is at rest.

19. Method for controlling a link rod according to claim 1, the part (138-538) which extends into the other (136-536) being the internal part and the other being the external part, method wherein it is determined whether an external face of the external part has a cavity (93).

20. Method according to the preceding claim, wherein, when the face has a cavity (93), a depth (p) of the cavity is determined and compared with a predetermined threshold.
